# EUROPÄISCHE PATENTANMELDUNG

(11) **EP 3 597 428 A1**
(43) Veröffentlichungstag der Anmeldung: **22.01.2020**
(21) Anmeldenummer: 19184346.5
(22) Anmeldetag: 04.07.2019
(51) Int. Cl.: B33Y 30/00, B29C 64/124, B29C 64/264, B29C 64/286, B29C 64/393, B33Y 50/02, G01B 11/00

(54) **VORRICHTUNG ZUR ADDITIVEN HERSTELLUNG VON BAUTEILEN, BEI DER EINE TRÄGERPLATTFORM IN EINEN MIT EINEM FOTOSTRUKTURIERBAREN FLÜSSIGEN POLYMER BEFÜLLTEN DRUCKTANK EINFÜHRBAR IST**

(30) Priorität: 18.07.2018 DE 102018211976
(71) Anmelder: Technische Universität Dresden, 01069 Dresden (DE)
(72) Erfinder: Tiedje, Tobias, 01187 Dresden (DE); Lüngen, Sebastian, 01159 Dresden (DE); Bock, Karlheinz, 01069 Dresden (DE); Nieweglowksi, Krzysztof, 01159 Dresden (DE)
(74) Vertreter: Pfenning, Meinig & Partner mbB

(57) **Zusammenfassung**

Bei der Vorrichtung zur additiven Herstellung von Bauteilen ist eine Trägerplattform in einen mit einem fotostrukturierbaren flüssigen Polymer befüllten Drucktank einführbar. Unterhalb des Drucktanks ist mindestens eine, die monochromatische elektromagnetische Strahlung, die zur Vernetzung des fotostrukturierbaren Polymers geeignet ist, emittiert, angeordnet, mit der bei einer schrittweisen Bewegung der Trägerplattform und entsprechender Beeinflussung der Strahlungsquelle das jeweilige Bauteil schichtweise aufgebaut wird. Unterhalb des Bodens des Drucktanks ist mindestens eine Kamera so angeordnet oder bewegbar, dass eine Abbildung zumindest des Oberflächenbereichs der Trägerplattform auf der das jeweilige Bauteil aufgebaut wird, erfolgt. Die Kamera(s) sind mit einer elektronischen Auswerteeinheit verbunden, in der eine Bestimmung der Position und/oder Ausrichtung der zum Boden des Drucktanks weisenden Oberfläche der Trägerplattform und/oder mindestens eines auf der zum Boden des Drucktanks weisenden Oberfläche der Trägerplattform angeordneten Körpers erfolgt. Die elektronische Auswerteeinheit ist so ausgebildet, dass dabei erkannte Abweichungen von einer Vorgabe im CAD-Modell so korrigiert werden, dass das Bauteil mit der für das Bauteil vorgegebenen Geometrie und Dimensionierung herstellbar ist.

## Beschreibung

Die Erfindung betrifft eine Vorrichtung zur additiven Herstellung von Bauteilen, bei der eine Trägerplattform in einen mit einem fotostrukturierbaren flüssigen Polymer befüllten Drucktank einführbar ist. Durch eine sukzessive Bewegung der Trägerplattform und eine lokal definierte Bestrahlung in Richtung der Oberfläche der Trägerplattform mit geeigneter elektromagnetischer Strahlung kann ein Bauteil schichtweise auf der Oberfläche der Trägerplattform aufgebaut werden.

Für die Bestrahlung werden geeignete Strahlungsquellen eingesetzt, die die Bestrahlung gemäß eines CAD-Modells oder eines anderen dazu geeigneten Computerprogramms so steuern, dass eine dreidimensionale Geometrie des so herzustellenden Bauteils erhalten werden kann.

Um ein lokal definiertes Bestrahlen, das zur Vernetzung des fotostrukturierbaren Polymers führt, kann mit dem Einsatz von Masken erfolgen. Dies hat aber den Nachteil, das für die Herstellung eines Bauteils mehrere Masken erforderlich sind. Außerdem kann mit einer oder mehreren so spezifischen Maske(n) jeweils nur ein Bauteiltyp mit gleicher Geometrie und Dimensionierung gefertigt werden, was die Flexibilität stark einschränkt und die Herstellungskosten sowie den Herstellungsaufwand erhöht.

Mit Masken kann man zwar die Fertigungsgenauigkeit erhöhen, dem stehen aber die genannten Nachteile gegenüber.

Es ist daher Aufgabe der Erfindung, Möglichkeiten für eine flexible additive Fertigung von Bauteilen unter Einsatz fotostrukturierbarer Polymere mit erhöhter Präzision anzugeben.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Vorrichtung zur additiven Herstellung von Bauteilen ist eine Trägerplattform in einen mit einem fotostrukturierbaren flüssigen Polymer befüllten Drucktank einführbar. Unterhalb des Drucktanks ist mindestens eine zur lokal definierten Bestrahlung in Richtung des Bodens der Trägerplattform ausgebildete Strahlungsquelle, die monochromatische elektromagnetische Strahlung, die zur Vernetzung des fotostrukturierbaren Polymers geeignet ist, emittiert, angeordnet.

Mit der monochromatischen elektromagnetischen Strahlung wird bei einer sukzessiven schrittweisen Bewegung der Trägerplattform in eine vom Boden des Drucktanks (2) weg weisende Richtung und entsprechender Beeinflussung der Strahlungsquelle gemäß eines vorgegebenen CAD-Modells das jeweilige Bauteil schichtweise aufgebaut.

Zumindest der Boden des Drucktanks ist für diese monochromatische elektromagnetische Strahlung transparent.

Unterhalb des Bodens des Drucktanks ist mindestens eine Kamera so angeordnet oder bewegbar, dass auf der/den Kamera(s) eine Abbildung zumindest des Oberflächenbereichs der Trägerplattform auf der das jeweilige Bauteil aufgebaut wird, erfolgt.

Die Kamera(s) ist/sind mit einer elektronischen Auswerteeinheit verbunden, in der eine Bestimmung der Position und/oder Ausrichtung der zum Boden des Drucktanks weisenden Oberfläche der Trägerplattform und/oder mindestens eines auf der zum Boden des Drucktanks weisenden Oberfläche der Trägerplattform angeordneten Körpers erfolgt.

Die elektronische Auswerteeinheit ist weiter so ausgebildet, dass dabei erkannte Abweichungen von einer Vorgabe im CAD-Modell so korrigiert werden, dass das Bauteil mit der für das Bauteil vorgegebenen Geometrie und Dimensionierung herstellbar ist.

Die elektronische Auswerteeinheit kann gleichzeitig auch als Steuereinheit ausgebildet sein und für eine Beeinflussung der Strahlungsquelle genutzt werden.

Ein Körper, der auf der in Richtung Strahlungsquelle weisenden Oberfläche der Trägerplattform oder einem bereits ausgebildeten Teil des jeweiligen Bauteils angeordnet ist, kann in das Bauteil integriert und dabei teilweise oder vollständige vom polymeren Bauteilwerkstoff während des Herstellungsprozesses umschlossen werden. Körper können beispielsweise in ein Bauteil zu integrierende elektronische Bauelemente, insbesondere Mikroprozessoren, Aktuatoren oder Sensoren sein. Körper können auch elektrische Kontakte oder Leiter sein.

Geeignete fotostrukturierbare Polymere und zu deren Vernetzung geeignete Wellenlängen elektromagnetischer Strahlung sind allgemein, insbesondere aus der Sterolithografie bekannt.

Zusätzlich kann mindestens eine Lichtquelle, mit der elektromagnetische Strahlung mit Wellenlängen, die nicht die Wellenlänge der monochromatischen elektromagnetischen Strahlung umfasst, in Richtung der zum Boden des Drucktanks weisenden Oberfläche der Trägerplattform emittiert und unterhalb des Bodens des Drucktanks angeordnet und der Boden des Drucktanks auch für diese elektromagnetische Strahlung transparent sein. Mit dieser zusätzlichen Beleuchtung lassen sich verbesserte Abbildungen erreichen, die mit der/den Kamera(s) erfasst und dann mittels der elektronischen Auswerteeinheit

Die mindestens eine Strahlungsquelle kann eine Laserstrahlungsquelle sein, bei der ein emittierter Laserstrahl mittels mindestens eines optischen Elements und mittels eines CAD-Models mit seinem Brennfleck so auslenkbar ist, dass der Brennfleck entlang einer vorgegebenen Kontur der jeweiligen Schichten, die für den Aufbau des Bauteils vorgesehen sind, auslenkbar ist. So kann ein dafür geeignetes optisches Element ein um mindestens zwei Rotationsachsen verschwenkbares die monochromatische Strahlung reflektierendes Element sein. Selbstverständlich können für eine zweidimensionale Auslenkbewegung des Brennflecks auch zwei im Strahlengang des Laserstrahls nacheinander angeordnete reflektierende Elemente, die jeweils um eine Rotationsachse verschwenkbar sind, eingesetzt werden. Die Rotationsachsen sind dabei bevorzugt senkrecht zueinander ausgerichtet.

Die mindestens eine Strahlungsquelle kann aber auch ein gemäß eines CAD-Modells digital steuerbarer Projektor (DLP-Projektor) sein, mit dem ein schichtweiser Aufbau des jeweiligen Bauteils erreichbar ist.

Zwischen dem Boden des Drucktanks und der/den Kamera(s) kann auch mindestens ein weiteres optisches Element angeordnet und so ausgebildet sein, dass eine Vergrößerung oder Verkleinerung der Abbildung der zum Boden des Drucktanks weisenden Oberfläche der Trägerplattform und/oder mindestens eines auf der zum Boden des Drucktanks weisenden Oberfläche der Trägerplattform angeordneten Körpers ausgebildet ist.

Mit einem weiteren optischen Element kann man auch eine Entzerrung der Abbildung auf der/den Kamera(s) und/oder eine Filterung und/oder Polarisierung der Abbildungen auf der/den Kamera(s) erreicht werden.

Zwischen dem Boden des Drucktanks und der/den Kamera(s) kann ein optisches Element angeordnet sein, mit dem eine Richtungsänderung der elektromagnetischen Strahlung oder eine Richtungsänderung eines Anteils der elektromagnetischen Strahlung, mit der Abbildungen der zum Boden des Drucktanks weisenden Oberfläche der Trägerplattform und/oder mindestens eines auf der zum Boden des Drucktanks weisenden Oberfläche der Trägerplattform angeordneten Körpers erhalten werden, in Richtung der Kamera(s) erreichbar ist. Dabei kann es sich bei diesem optischen Element um einen Strahlteiler oder einen halbdurchlässigen Spiegel oder ein optisches Prisma handeln. Eine reflektierende Oberfläche dieses optischen Elements kann dabei in Bezug zur optischen Achse der monochromatischen elektromagnetischen Strahlung so ausgerichtet sein, dass die Richtungsänderung auf die Kamera(s) erreichbar ist.

Die Kamera(s) kann/können während der zur Vernetzung des fotostrukturierbaren Polymers führenden Bestrahlung mit der mindestens einen Strahlungsquelle aus dem Strahlengang der monochromatischen elektromagnetischen Strahlung heraus bewegbar sein, so dass Abbildungen nur dann erfasst und ausgewertet werden, wenn kein additiver Schichtaufbau erfolgt.

Mit mindestens zwei Kameras kann auch eine Verkippung der in Richtung Strahlungsquelle weisenden Oberfläche der Trägerplattform in Bezug zu einer vorgegebenen Ebene durch entsprechende Auswertung in der elektronischen Auswerteeinheit erkannt und berücksichtigt werden. Es kann damit auch eine Verkippung eines Körpers in Bezug zu einer vorgegebenen Ebene erkannt und berücksichtigt werden.

Anstelle von Kameras können bei der Erfindung auch andere Detektoren eingesetzt werden, mit denen eine ortsaufgelöste Erfassung elektromagnetischer Strahlung erreichbar ist. Dies kann beispielsweise eine Reihen- und Spaltenanordnung von CCD-Elementen sein.

Bei Anwendung eines SLA-/DLP-Drucker als Strahlungsquelle mit optischer Inspektion also
- In einem Stereolithografie(SLA)- oder auch Digital Light Patterning (DLP)-Drucker werden üblicherweise fotostrukturierbare Polymere schichtweise hergestellt
   1. Dabei fährt die Trägerplattform in den Drucktank bis kurz vor die Oberfläche des mit fotostrukturierbarem Polymer gefüllten Drucktanks.
   2. Schichtweise wird dann die erste auszubildende Schicht belichtet und dadurch das fotostrukturierbare Polymer lokal definiert vernetzt.
   3. Die Trägerplattform wird um die jeweilige auszubildende Schichtdicke einer auszubildenden Schicht aus dem Drucktank herausgefahren und die weiteren Schichten werden bis zum Abschluss des Druckes nach 2. sukzessive übereinander hergestellt.
- Befindet sich nun ein Körper an der Trägerplattform und soll gemäß einem CAD generierten Modell bedruckt werden, kann dieser, ohne zu erkennen wo der Körper sich auf der Trägerplattform befindet, das Druckmodell nicht in Bezug zur Position und/oder der Ausrichtung des Körpers ausgerichtet werden.
   ∘ Daher kann im Strahlengang der monochromatischen elektromagnetischen Strahlung zwischen Strahlungsquelle (DLP-Projektor oder SLA-Laser) ein optisches Element, beispielsweise ein Prisma, eingebracht werden, sodass ein Teil des projizierten Lichts auf eine Kamera auftrifft und die zugewandte Oberfläche der Trägerplattform auf der Kamera abgebildet.
   ∘ Dadurch können sowohl das projizierte Druckmodell als auch der Körper an der Trägerplattform abgebildet und als Bild mit der Kamera aufgenommen werden. Mit Hilfe von Lichtquellen kann die Trägerplattform und/oder der Körper an der Trägerplattform separat bestrahlt werden, um ein Bild zur Weiterverarbeitung zu generieren.
      ▪ Andere Kombinationen, wie z.B. mehrere Kameras, die separate Bilder von der Quelle und des Körpers separat bzw. kombiniert aufnehmen können, sind einsetzbar. Dabei können auch verschiedene optische Elemente im Strahlengang vor mindestens einer Kamera angeordnet sein.
   ∘ Das aufgenommene Bild wird über Algorithmen weiterverarbeitet, woraus sich folgende Lagen und Positionen ergeben:
      ▪ Die Position und Ausrichtung der Trägerplattform
      ▪ Die Position und Ausrichtung des Körpers an der Trägerplattform
      ▪ Die Position und Ausrichtung des projizierten Bildes der Lichtquelle (aus dem CAD-Modell generiert)
   ∘ Die daraus erfassten unterschiedlichen Positionen und Ausrichtungen können dann durch Verschiebung, Verdrehung, Skalierung oder andere Transformationen aneinander angepasst werden.
   ∘ Mit den so angepassten CAD-Modellen und oder Positionen und Ausrichtungen kann das zu druckende Bauteil auf dem Körper an der Trägerplattform hergestellt und Abweichungen von dem vorgegebenen CAD-Model kompensiert werden.

Nachfolgend soll die Erfindung beispielhaft näher erläutert werden. Es können Merkmale die in einer Figur enthalten und bei einem Beispiel berücksichtigt sind, unabhängig von der jeweiligen Figur und Beispiel beliebig miteinander kombiniert werden.

Dabei zeigen:
- Figur 1: einen prinzipiellen Aufbau einer Vorrichtung zur additiven Fertigung von Bauteilen mit einem auslenkbaren Laserstrahl;
- Figur 2: einen prinzipiellen Aufbau einer Vorrichtung zur additiven Fertigung von Bauteilen mit einem digital steuerbaren Projektor (DLP-Projektor);
- Figur 3: ein erstes Beispiel einer erfindungsgemäßen Vorrichtung;
- Figur 4: ein zweites Beispiel einer erfindungsgemäßen Vorrichtung;
- Figur 5: ein drittes Beispiel einer erfindungsgemäßen Vorrichtung;
- Figur 6: mehrere Darstellungen von Bauteilen die mit einem Versatz oder einer Verkippung hergestellt werden würden, wenn keine Kompensation gemäß der Erfindung erreicht werden würde und Darstellungen von entsprechend korrigiert hergestellten Bauteilen.

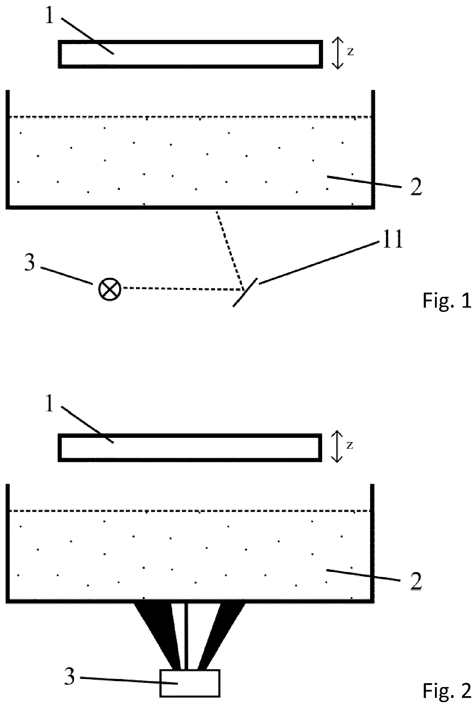

In Figur 1 ist eine Vorrichtung gezeigt, bei der ein mit einem fotostrukturierbaren Polymer gefüllte Drucktank 2 vorhanden ist. Es ist auch die noch nicht in das Polymer eingetauchte Trägerplattform 1 und mit dem Doppelpfeil die mögliche vertikale Bewegung der Trägerplattform erkennbar.

Zu Beginn des Fertigungsprozesses wird die Trägerplattform 1 in das Polymer so weit eingetaucht, bis die in Richtung Boden des Drucktanks 2 weisende Oberfläche der Trägerplattform einen vorgegebenen Abstand aufweist.

Mit der Strahlungsquelle 3 wird ein Laserstrahl monochromatischer Strahlung, die zur Vernetzung des Polymers geeignet ist, auf ein um zwei senkrecht zueinander ausgerichtete Rotationsachsen verschwenkbares für die Laserstrahlung reflektierendes Element 11 gerichtet. Durch definierte Verschwenkbewegung des reflektierenden Elements erfolgt eine Auslenkbewegung des Brennflecks des Laserstrahls entlang einer mit einem CAD-Modell vorgegebenen Kontur. Das Polymer wird entsprechend dieser Auslenkbewegung lokal definiert in einer Schicht ausgehärtet. Nach Ausbildung einer Schicht wird die Trägerplattform 1 vertikal nach oben bewegt, so dass sich der Abstand seiner in Richtung Boden des Drucktanks 2 weisenden Oberfläche in Bezug zum Boden des Drucktanks 2 definiert vergrößert. Der Abstand sollte der Dicke einer nachfolgend analog auszubildenden Schicht entsprechend zumindest diese aber berücksichtigen. Ist der gewünschte Abstand eingestellt, kann der Laserstrahl erneut ausgelenkt und die nächste Schicht des Bauteils ausgebildet werden. Die nacheinander ausgebildeten Schichten können voneinander abweichende Konturen aufweisen.

Bei der in Figur 2 gezeigten Vorrichtung wird, was die Bewegung der Trägerplattform 1 betrifft analog zum Beispiel gemäß Figur 1 vorgegangen. Anstelle der Laserstrahlungsquelle wird hier ein digital steuerbarer Projektor als Strahlungsquelle 3 genutzt. Damit kann bei einer Projektion gleichzeitig eine vollständige Schicht ausgebildet werden. Die Konturen der Projektionen können für die einzelnen Schichten ebenfalls unterschiedlich sein.

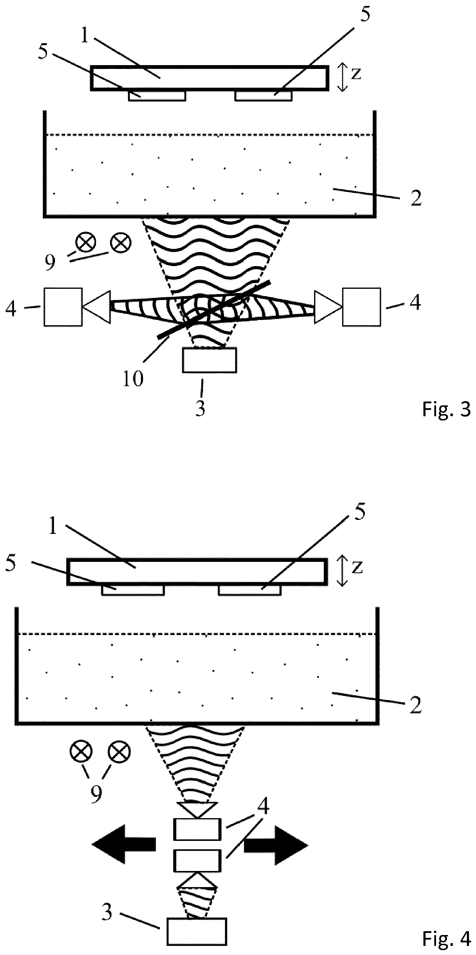

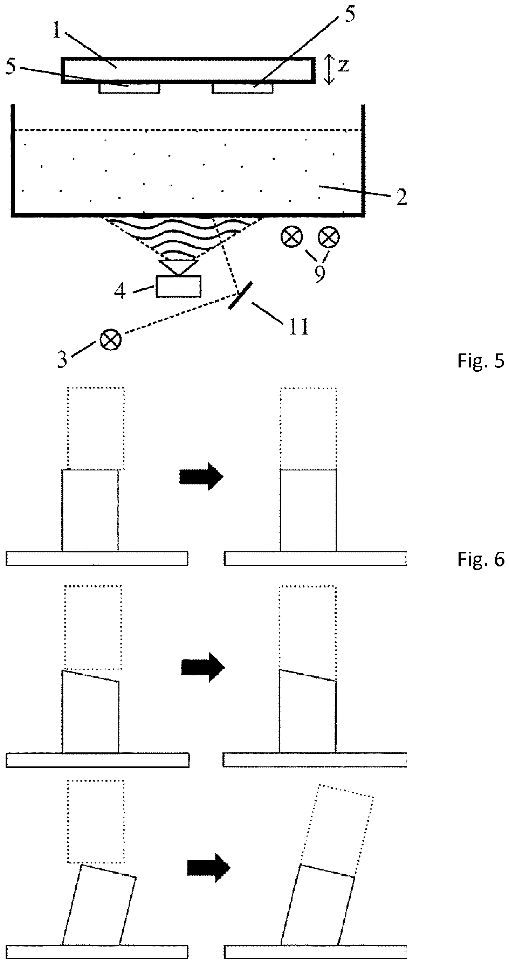

Figur 3 zeigt ein erstes Beispiel einer erfindungsgemäßen Vorrichtung, bei dem auf das Beleuchtungsprinzip gemäß Figur 2 zur Anwendung kommt. Wie man erkennen kann sind an der Oberfläche der Trägerplattform 1 bei diesem Beispiel und auch bei den Beispielen gemäß der Figuren 4 und 5 jeweils zwei Körper 5 vorhanden, die in das jeweilige herzustellende Bauteil während der Herstellung integriert werden sollen und können.

Aus Figur 3 wird weiter deutlich, dass man Lichtquellen 9 unterhalb des Bodens des Drucktanks 2 für eine zusätzliche Beleuchtung vorsehen kann. Von den Lichtquellen 9 kann elektromagnetische Strahlung, die keine Wellenlängen der für die Vernetzung des Polymers eingesetzten elektromagnetischen Strahlung aufweist, in den Bereich in dem das jeweilige Bauteil auf der Trägerplattform 1 aufgebaut werden soll, emittiert werden. Gleich oder ähnlich wird auch beim zweiten und dritten Beispiel, die in den Figuren 4 und 5 gezeigt sind, vorgegangen.

Oberhalb der Strahlungsquelle 3 ist beim ersten Beispiel ein halbdurchlässiger Spiegel 10 angeordnet, mit dem elektromagnetische Strahlung, die eine Abbildung im Bereich der Oberfläche der Trägerplattform 1 oder des bereits gefertigten Teils eines Bauteils darstellt, auf jeweils eine Kamera 4 richtet.

Mit den Kameras 4 werden die Abbildungen erfasst und die ortsaufgelöst erfassten Signale einer nicht dargestellten elektronischen Auswerteeinheit zugeführt, die auch als Steuereinheit für die Strahlungsquelle 3 und die Bewegung der Trägerplattform 1 ausgebildet ist.

Mit den ortsaufgelöst erfassten Signalen wird in der elektronischen Auswerteeinheit ein Vergleich mit Sollwerten eines CAD-Modells durchgeführt und bei Erkennung von Abweichungen das CAD-Modell an die tatsächlichen Bedingungen angepasst. Mit dem angepassten CAD-Modell kann die zur Vernetzung führende Bestrahlung angepasst werden, so dass ein Bauteil hergestellt werden kann, das den Vorgaben entspricht, ohne dass eine Korrektur der Ausrichtung und/oder Positionierung der Trägerplattform 1 und/oder eines dort angeordneten Körpers 5 erforderlich wird.

Das in Figur 4 gezeigte zweite Beispiel ist ähnlich, wie das erste Beispiel konfiguriert und kann auch so genutzt werden. Es ist lediglich auf das optische Element 10 verzichtet worden.

Anstelle dessen sind an den Kameras 4 Bewegungsmechanismen oder Manipulatoren (nicht gezeigt) vorhanden, mit denen sie sukzessive so bewegt werden können, dass sie Abbildungen erfassen und für die Auswertung und Fehlerkompensation an die elektronische Auswerteeinheit weiterleiten können, wenn keine Vernetzung von Polymer durch Bestrahlung durchgeführt wird.

Bei dem in Figur 5 gezeigten dritten Beispiel ist der digitale Projektor als Strahlungsquelle 3 durch eine Laserstrahlungsquelle mit einem verschwenkbaren für die Laserstrahlung reflektierenden Element 11 mit dem Vorschubbewegung des Brennflecks des Laserstrahls als monochromatische elektromagnetische Strahlung beeinflusst werden kann, wie es zu Figur 1 erläutert worden ist.

Ansonsten ist dieses Beispiel wie die anderen erfindungsgemäßen Beispiele aufgebaut und funktioniert auch so.

In den jeweils linken Darstellungen von Figur 6 sind mögliche bei der additiven Fertigung von Bauteilen auftretende Fehler, wie eine Verschiebung von einer vorgegebenen Position (links oben), eine schräg geneigte Oberfläche im inneren eines Bauteils (links mitte) und ein gegenüber der Horizontalen verkipptes Bauteil (links unten).

Diese Fehler können mit einer erfindungsgemäß ausgebildeten Vorrichtung unmittelbar während des Fertigungsprozesses nach Erkennen der Fehler und Anpassung des jeweiligen CAD-Modells kompensiert werden, wie es in den rechten Darstellungen von Figur 6 deutlich wird.

Anwendungsbeispiel 1: SLA-/DLP-Drucker mit optischer Inspektion
- In einem Stereolithografie(SLA)- oder auch Digital Light Patterning (DLP)-Drucker werden üblicherweise fotostrukturierbare Polymer schichtweise hergestellt
   1. Dabei fährt die Trägerplattform in den Drucktank bis kurz vor die Oberfläche des mit fotostrukturierberem Polymer gefüllten Drucktanks.
   2. Schichtweise wird dann die erste auszubildende Schicht belichtet und dadurch das fotostrukturierbare Polymer lokal definiert vernetzt.
   3. Die Trägerplattform wird um die jeweilige auszubildende Schichtdicke einer auszubildenden Schicht aus dem Drucktank herausgefahren und die weiteren Schichten werden bis zum Abschluss des Druckes nach 2. sukzessive übereinander hergestellt.
- Befindet sich nun ein Körper an der Trägerplattform und soll gemäß einem CAD generierten Modell bedruckt werden, kann dieser, ohne zu erkennen wo der Körper sich auf der Trägerplattform befindet, das Druckmodell nicht in Bezug zur Position und/oder der Ausrichtung des Körpers ausgerichtet werden.
   ∘ Daher wird in den Strahlengang zwischen Quelle (DLP-Projektor oder SLA-Laser) ein optisches Element, beispielsweise ein Prisma, eingebracht, sodass ein Teil des projizierten Lichts auf eine Kamera auftrifft und die zugewandte Oberfläche der Trägerplatte auf der Kamera abgebildet.
   ∘ Dadurch können sowohl das projizierte Druckmodell als auch der Körper an der Trägerplattform abgebildet und als Bild mit der Kamera aufgenommen werden. Mit Hilfe von Lichtquellen kann die Trägerplattform und/oder der Körper an der Trägerplattform separat bestrahlt werden, um ein Bild zur Weiterverarbeitung zu generieren.
      ▪ Andere Kombinationen, wie z.B. mehrere Kameras, die separate Bilder von der Quelle und des Körpers separat bzw. kombiniert aufnehmen können, sind einsetzbar. Dabei können auch verschiedene optische Elemente im Strahlengang vor mindestens einer Kamera angeordnet sein.
   ∘ Das aufgenommene Bild wird über Algorithmen weiterverarbeitet, woraus sich folgende Lagen und Positionen ergeben:
      ▪ Die Position und Ausrichtung der Trägerplattform
      ▪ Die Position und Ausrichtung des Körpers an der Trägerplattform
      ▪ Die Position und Ausrichtung des projizierten Bildes der Lichtquelle (aus dem CAD-Modell generiert)
   ∘ Die daraus erfassten unterschiedlichen Positionen und Ausrichtungen werden dann durch Verschiebung, Verdrehung, Skalierung oder andere Transformationen aneinander angepasst.
   ∘ Mit den so angepassten CAD-Modellen und oder Positionen und Ausrichtungen kann das zu druckende Modell auf dem Körper an der Trägerplattform hergestellt und Abweichungen von dem vorgegebenen CAD-Model kompensiert werden.

## Patentansprüche

1. Vorrichtung zur additiven Herstellung von Bauteilen, bei der eine Trägerplattform (1) in einen mit einem fotostrukturierbaren flüssigen Polymer befüllten Drucktank (2) einführbar ist und
unterhalb des Drucktanks (2) mindestens eine zur lokal definierten Bestrahlung in Richtung des Bodens der Trägerplattform (1) ausgebildete Strahlungsquelle (3), die monochromatische elektromagnetische Strahlung, die zur Vernetzung des fotostrukturierbaren Polymers geeignet ist, emittiert, angeordnet ist, und
mit der bei einer sukzessiven schrittweisen Bewegung der Trägerplattform (1) in eine vom Boden des Drucktanks (2) weg weisende Richtung und entsprechender Beeinflussung der Strahlungsquelle (3) gemäß eines vorgegebenen CAD-Modells das jeweilige Bauteil schichtweise aufgebaut wird,
wobei zumindest der Boden des Drucktanks (2) für diese monochromatische elektromagnetische Strahlung transparent ist; und
unterhalb des Bodens des Drucktanks (2) mindestens eine Kamera (4) so angeordnet oder bewegbar ist, dass auf der/den Kamera(s) (4) eine Abbildung zumindest des Oberflächenbereichs der Trägerplattform (1) auf der das jeweilige Bauteil aufgebaut wird, erfolgt und
die Kamera(s) (4) mit einer elektronischen Auswerteeinheit verbunden ist/sind, in der eine Bestimmung der Position und/oder Ausrichtung der zum Boden des Drucktanks (2) weisenden Oberfläche der Trägerplattform (1) und/oder mindestens eines auf der zum Boden des Drucktanks (2) weisenden Oberfläche der Trägerplattform (1) angeordneten Körpers (5) erfolgt und
die elektronische Auswerteeinheit weiter so ausgebildet ist, dass dabei erkannte Abweichungen von einer Vorgabe im CAD-Modell so korrigiert werden, dass das Bauteil mit der für das Bauteil vorgegebenen Geometrie und Dimensionierung herstellbar ist; wobei
ein mit mindestens einer Kamera aufgenommenes Bild mit Algorithmen weiterverarbeitet und daraus die Position und Ausrichtung der Trägerplattform (1) und mindestens eines Körpers (5) an der Trägerplattform (1) bestimmbar ist und mit daraus erfassten Positionen und Ausrichtungen durch Verschiebung, Verdrehung und Ausrichtung oder Skalierung angepasst werden und mit den so angepassten CAD-Modellen das zu druckende Bauteil dem Körper (5) an der Trägerplattform (1) hergestellt und Abweichungen von dem vorgegebenen CAD-Modell kompensiert werden.

2. Vorrichtung nach Anspruch 1, **dadurch gekennzeichnet, dass** mindestens eine Lichtquelle (9), mit der elektromagnetische Strahlung mit Wellenlängen, die nicht die Wellenlänge der monochromatischen elektromagnetischen Strahlung umfasst, in Richtung der zum Boden des Drucktanks weisenden Oberfläche der Trägerplattform (1) emittiert und unterhalb des Bodens des Drucktanks (2) angeordnet und der Boden des Drucktanks (2) auch für diese elektromagnetische Strahlung transparent ist.

3. Vorrichtung nach einem der vorhergehenden Ansprüche, **dadurch gekennzeichnet, dass** die mindestens eine Strahlungsquelle (3) eine Laserstrahlungsquelle ist, bei der ein emittierter Laserstrahl mittels mindestens eines optischen Elements (6) und mittels eines CAD-Models mit seinem Brennfleck so auslenkbar ist, dass der Brennfleck entlang einer vorgegebenen Kontur der jeweiligen Schichten, die für den Aufbau des Bauteils vorgesehen sind, auslenkbar ist
oder
die mindestens eine Strahlungsquelle (3) ein gemäß eines CAD-Models digital steuerbarer Projektor ist, mit dem ein schichtweiser Aufbau des jeweiligen Bauteils erreichbar ist.

4. Vorrichtung nach einem der vorhergehenden Ansprüche, **dadurch gekennzeichnet, dass** zwischen dem Boden des Drucktanks (2) und der/den Kamera(s) (4) mindestens ein weiteres optisches Element angeordnet und so ausgebildet ist, dass eine Vergrößerung oder Verkleinerung der Abbildung der zum Boden des Drucktanks (2) weisenden Oberfläche der Trägerplattform (1) und/oder des mindestens einen auf der zum Boden des Drucktanks (2) weisenden Oberfläche der Trägerplattform (1) angeordneten Körpers (5) und/oder
eine Entzerrung der Abbildung auf der/den Kamera(s) (4) und/oder eine Filterung und/oder Polarisierung der Abbildungen auf der/den Kamera(s) (4) erreichbar ist.

5. Vorrichtung nach einem der vorhergehenden Ansprüche, **dadurch gekennzeichnet, dass** zwischen dem Boden des Drucktanks (2) und der/den Kamera(s) (4) ein optisches Element angeordnet ist, mit dem eine Richtungsänderung der elektromagnetischen Strahlung oder eine Richtungsänderung eines Anteils der elektromagnetischen Strahlung, mit der Abbildungen der zum Boden des Drucktanks (2) weisenden Oberfläche der Trägerplattform (1) und/oder mindestens eines auf der zum Boden des Drucktanks (2) weisenden Oberfläche der Trägerplattform (1) angeordneten Körpers (5) erhalten werden, in Richtung der Kamera(s) (4) erreichbar ist.

6. Vorrichtung nach einem der vorhergehenden Ansprüche, **dadurch gekennzeichnet, dass** die Kamera(s) (4) während der zur Vernetzung des fotostrukturierbaren Polymers führenden Bestrahlung mit der mindestens einen Strahlungsquelle (3) aus dem Strahlengang der monochromatischen elektromagnetischen Strahlung heraus bewegbar sind.
